## Europäisches Patentamt
## European Patent Office
## Office européen des brevets

(11) Publication number: **0 119 775**
**B1**

## EUROPEAN PATENT SPECIFICATION

(45) Date of publication of patent specification: **12.07.89**

(51) Int. Cl.⁴: **B 60 J 1/17**

(21) Application number: **84301336.8**

(22) Date of filing: **01.03.84**

(54) Vehicle body structure.

(30) Priority: **18.03.83 JP 39949/83**

(43) Date of publication of application:
**26.09.84 Bulletin 84/39**

(45) Publication of the grant of the patent:
**12.07.89 Bulletin 89/28**

(84) Designated Contracting States:
**DE FR GB**

(56) References cited:
**EP-A-0 040 588**
**EP-A-0 065 336**
**DE-A-2 435 766**
**US-A-2 228 777**

(73) Proprietor: **TOYOTA JIDOSHA KABUSHIKI KAISHA**
**1, Toyota-cho Toyota-shi**
**Aichi-ken 471 (JP)**

(72) Inventor: **Okamoto, Yuuji**
**10 Banchi Toyota-cho**
**Toyota-shi Aichi-ken (JP)**
Inventor: **Mori, Katsunori**
**36, 21 Ban, 3-chome Nomiyama-cho**
**Toyota-shi Aichi-ken (JP)**

(74) Representative: **Ben-Nathan, Laurence Albert et al**
**Urquhart-Dykes & Lord 91 Wimpole Street London W1M 8AH (GB)**

Courier Press, Leamington Spa, England.

## Description

The present invention relates to a vehicle body structure, and particularly to a vehicle body structure which locates an outer surface of a window glass of a vehicle door, in a position flush with an adjacent outer surface of the door frame.

In order to reduce undesirable air resistance and wind noise generated during running of the vehicle and to improve the aesthetic appearance of the vehicle body, it is known to instal a door therein, with an outer side surface of a door window glass designed to be almost flush with an outer side face of the door frame.

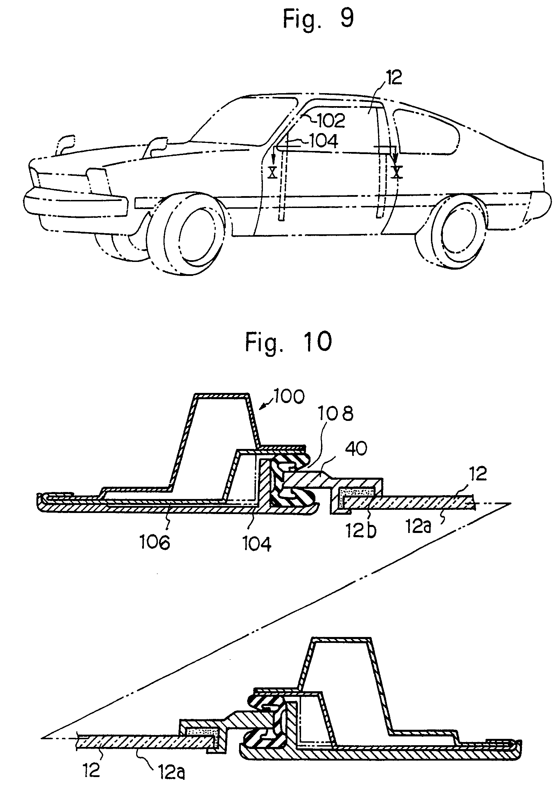

One example of such a door is disclosed in Japanese laid open utility model JP—U—56-143477 (Japanese utility model Application No. Sho 55-42886), which is shown in Figures 9 and 10 of the accompanying drawings. According to the door structure thereof, not only is a rear portion of the door fixed with respect to a slider 40 but also a front portion of a door window glass 12 is fixed to the slider 40. The slider 40 extends from the front portion 12b of the door window glass 12 to a guide rail 108. The guide rail 108 is formed between a front frame member 102 and a garnish element 104. The garnish element 104 is fixed to a lower portion of the front frame member 102. The slider 40 is guided by the guide rail 108, whereby the door window glass 12, whose outer surface 12a is maintained almost flush with the outer surface 106 of the door frame 100, is accordingly moved upwards and downwards. However, as the garnish element 104, which is of a triangle form, is fixed to the lower portion of the front frame member 102, this results in a narrowed field of vision and impairs the aesthetic appearance of the vehicle body.

The present invention was made in view of the above-described construction and to overcome or minimize the aforesaid disadvantages thereof. It is an object of this invention to provide a vehicle body structure which locates an outer surface of a window glass of a vehicle door in a position substantially flush with an adjacent outer surface of the door frame without the front upper portion of which being provided with any obstacles such as a slider member or a garnish element.

JP—U—56/143477 discloses a vehicle door assembly having the features of the preamble of Claim 1.

The invention provides a vehicle door assembly having the characterizing features of Claim 1.

The above object, features and advantages of the present invention will become more apparent from the following description of the preferred embodiment taken in conjunction with the accompanying drawings.

Fig. 1 is a side view of a vehicle employing a vehicle body structure according to the present invention;

Fig. 2 is an enlarged view of a vehicle door shown in Figure 1;

Fig. 3 is a cross-sectional view taken along the line III—III of Figure 2;

Fig. 4 is a cross-sectional view taken along the line IV—IV of Figure 2;

Fig. 5 is a cross-sectional view taken along the line V—V of Figure 2;

Fig. 6 is a cross-sectional view taken along the line VI—VI of Figure 2;

Fig. 7 is a cross-sectional view taken along the line VII—VII of Figure 2;

Fig. 8 is a side view of a window regulator for mounting a window glass upward and downward;

Fig. 9 is a perspective view of a prior art vehicle body structure; and,

Fig. 10 is a cross-sectional view of the door of the body structure of Figure 9.

The present invention is now described in detail with reference to the accompanying drawings which illustrate an embodiment of the present invention.

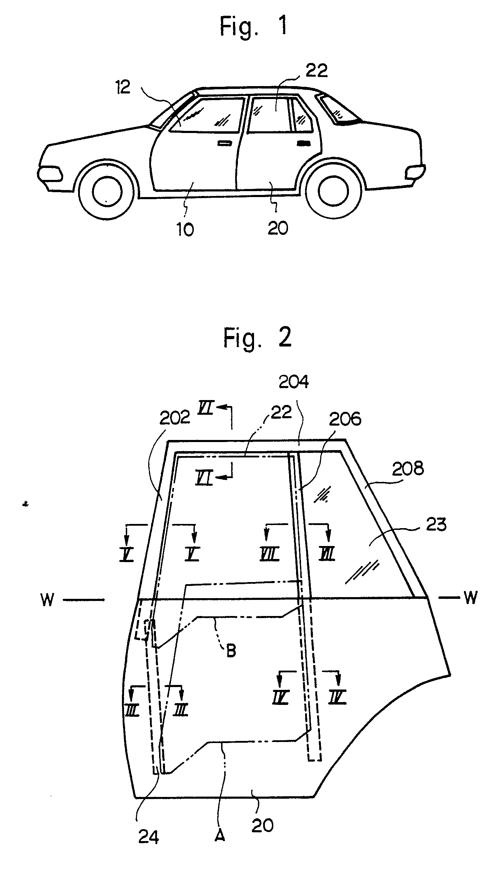

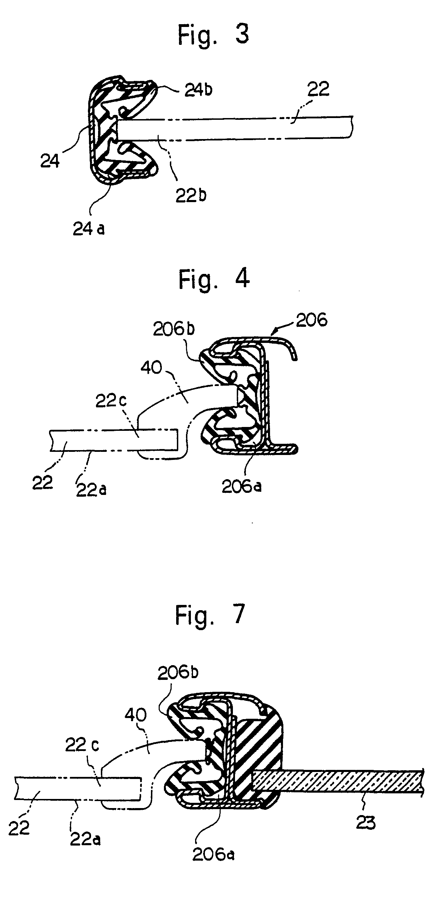

Figure 1 shows a side view of a vehicle having a body structure according to the present invention. The vehicle has a front door 10 and a rear door 20. Front and rear window glasses 12 and 22 are mounted within the front and rear doors 10 and 20, respectively. The enlarged detailed view of the vehicle doors of Figure 1 is illustrated in Figure 2. The vehicle body structure according to the present embodiment is employed in the rear door. The detailed structure of the rear door is illustrated in Figures 3 through 8.

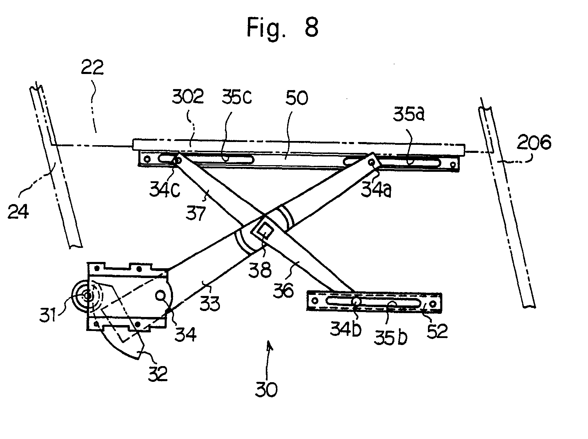

The rear door 20 has a front frame member 202, a top frame member 204, a further intermediate frame member 206 and a rear frame member 208. The rear window glass 22 is mounted in the rear door 20 such that the rear window glass 22 can be moved upwards and downwards by actuation of a window regulator 30 whose detailed structure is shown in Figure 8. A window glass 23 is mounted between the further intermediate frame member 206 and the rear frame member 208. The window glass 23 is fixed in the space defined between the frame members 206 and 208.

The further intermediate frame member 206 extends downwards as far as the lower portion of the rear door 20. The further intermediate frame member 206 has a channel 206a as shown in Figures 4 and 7. A cushion member 206b, consisting of a resilient member such as a rubber, is fitted into the channel 206a. A slider 40 is secured by adhesives to the rear end 22c of the rear window glass 22. The slider 40 extends substantially parallel to an outer surface 22a of the rear window glass 22. The rear end of the slider 40 fits into the cushion member 206b. The rear end of the rear window glass 22 is guided by the slider 40 moving in the channel 206a, during upwards and downwards movement of the glass. A front end 22b of the rear window glass 22 is guided by a guide rail 24. The guide rail 24 is mounted within the body of the rear door 20, and extends in a parallel relationship to the further intermediate frame member 206. The guide rail 24 does not extend above the line W—W shown in Figure 2. Hence, the guide rail 24 does not narrow the field of vision nor does it impair the aesthetic appearance of the vehicle body. The guide rail 24 has a cross-sectional form of a U-shape as shown in Figure 3, to define a channel 24a therein. A cushion member 24b, consisting of a resilient member such as a rubber, is fitted into a channel 24a. The front end 22b of the rear window glass 22 is fitted into the cushion member 24b, and is guided by the guide rail 24, during upwards and downwards movement of the glass.

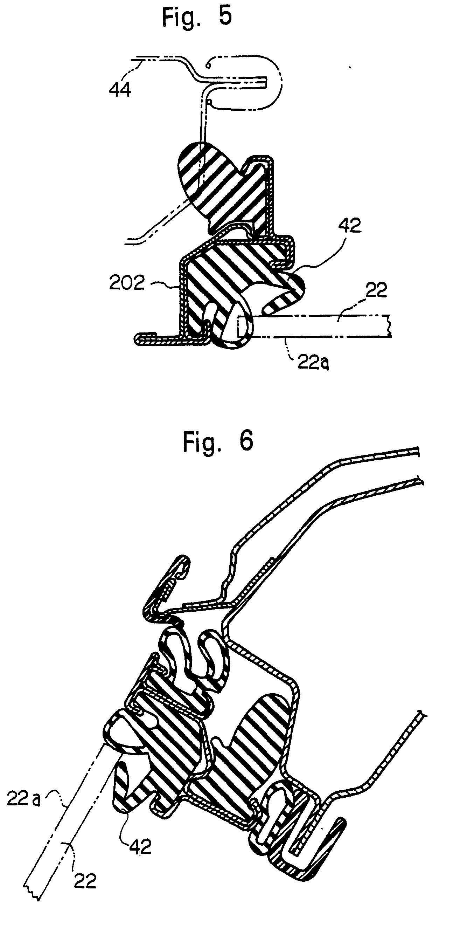

The front frame member 202 and the top frame member 204 have a weatherstrip 42 made of rubber. When the rear door glass 22 is moved upwards, the rear window glass 22 contacts the weatherstrip 42 of the front door frame member 202. The numeral 44 shown in Figure 5 designates a centre pillar of a vehicle body. Further, when the window glass 22 is moved up to fully close the window aperture defined between the frame members 202, 204 and 206, the top portion of the rear window glass 22 contacts with the weatherstrip 42 of the top frame member 204.

As shown in Figure 8, the lower portion of the rear window glass 22 is secured by a channel member 302 to the window regulator 30. The structure of the window regulator 30 is illustrated in Figure 8. When an operator rotates a window regulator handle (not shown in drawings), a pinion 31 is rotated. The rotation of the pinion 31 is transferred to a gear 32 which constantly meshes with the pinion 31. A main arm 33 is secured to the gear 32 such that the main arm 33 can be rotated around a pin 34. The main arm 33 has a roller 34a at its upper end. The roller 34a is inserted into a horizontal slot 35a which is defined in a bracket 50. The bracket 50 supports the rear window glass 22 through the channel member 302. Auxiliary arms 36 and 37 are mounted on the main arm 33 such that the auxiliary arms 36 and 37 rotate around a pin 38 secured to the main arm 33. The auxiliary arms 36 and 37 have rollers 34b and 34c at each end. The roller 34b of the auxiliary arm 36 is inserted into a horizontal slot 35b which is defined in a bracket 52. The bracket 52 is secured to the rear door 20. The roller 34c of the auxiliary arm 37 is inserted into a horizontal slot 35c which is defined in the bracket 50. When an operator rotates the window regulator handle, this rotates the pinion 31. The rotation of the pinion 31 rotates the gear 32. As the main arm 33 is secured to the gear 32, the main arm 33 is rotated by the rotation of the gear 32. By this rotation of the main arm 33, the main arm 33, the rollers (34a, 34b, 34c) of the auxiliary arms 36 and 37 are forced to slide in the slots 35a, 35b and 35c, respectively. Thus, the rear window glass 22 is moved upwards and downwards by the operation of the window regulator 30.

In operation, when an operator rotates the window regulator handle in order to lift the rear window glass from the position A indicated by a two-dot chain line shown in Figure 2, the front end 22b and rear end 22c of the rear window glass 22 are guided by the guide rail 24 and the channel 206a of the intermediate frame member 206, respectively. Thus, the rear window glass 22 is lifted, and reaches the fully closed position B shown in Figure 2.

According to this embodiment of the present invention, the vehicle body structure is applied to the rear door. However, it may be applied to a front door.

**Claims**

1. Vehicle door assembly, comprising:—
a door body (20);
a window glass (22) mounted within the door body (20) such that the window glass (22) can be moved upwards and downwards;
a window frame mounted on the door body (20) and comprising a front frame member (202) connected to the door body and provided with sealing means (42) for sealing with respect to a front edge portion of the window glass (22) when in a closed position; a further frame member (206) connected to the door body (20) and extending substantially the height of the door assembly and having a channel (206a) formed therein; and a top frame member (204) connecting said front and further frame members (202, 206) to define a window aperture, said top frame member (204) having sealing means (42) for sealing with a top edge portion of the window glass (22) when in a closed position; the outer surfaces of said front, top and further frame members (202, 204, 206) being substantially flush with the outer surface of the window glass (22);
a slider (40) secured to the rear edge of the window glass (22) and having an inwardly cranked rear projection for sliding engagement in said channel (206a) in said further frame member (206); and
a window regulator means (30) mounted within the door body (20) and being adapted to move the window glass (22) by operation thereof by a passenger;
characterized by
guide means (24) contained within the door body and having a channel (24a) for slidingly receiving a front edge portion of the window glass (22).

2. A vehicle door assembly as claimed in Claim 1 wherein said sealing means on the front and top frame members (202, 204) comprise a weatherstrip (42) secured thereto to seal against the window glass (22) in its fully closed position.

3. A vehicle door assembly as claimed in Claim 1 or 2, wherein cushion means (206b) are fitted into the channel (206a) of said further frame member (206) and said guide means (24) includes cushion means (24b) for receiving and contacting said front edge portion of the window glass (22).

4. A vehicle door assembly as claimed in any of Claims 1 to 3, wherein said guide means (24) extends in a parallel relationship to said further frame member (206).

**Patentansprüche**

1. Fahrzeugtüraufbau mit:
einem Türkörper (20),
einem Fensterglas (22), das derart in dem Türkörper (20) montiert ist,
daß dieses abwärts und aufwärts bewegbar ist,
einem an dem Türkörper (20) befestigten Fensterrahmen mit einem vorderen Rahmenabschnitt (202), der mit dem Türkörper verbunden ist und der mit Abdichteinrichtungen (42) zum Abdichten eines vorderen Randabschnitts des Fensterglases (22) versehen ist, wenn dieses in einer geschlossenen Stellung ist, einem weiteren Rahmenabschnitt (206), der mit dem Türkörper (20) verbunden ist und der sich im wesentlichen über die Höhe des Türaufbaus erstreckt und in dem ein Kanal (206a) ausgebildet ist und mit einem oberen Rahmenabschnitt (204), der den vorderen und weiteren Rahmenabschnitt (202, 206) verbindet, um eine Fensteröffnung zu bilden, wobei der obere Rahmenabschnitt (204) Abdichteinrichtungen (42) aufweist, um einen oberen Randabschnitt des Fensterglases (22) abzudichten, wenn dieses in einem geschlossenen Zustand ist, wobei die äußeren Oberflächen des vorderen, oberen und weiteren Rahmenabschnitts (202, 204, 206) im wesentlichen mit der äußeren Oberfläche des Fensterglases (22) fluchten,
einem Gleitstück (40), das an dem hinteren Rand des Fensterglases (22) angeordnet ist und einen nach innen gekröpften hinteren Abschnitt aufweist, der mit dem Kanal (206a) in dem weiteren Rahmenabschnitt (206) gleitend in Eingriff steht und
einer Fensterverstelleinrichtung (30), die in dem Türkörper (20) sitzt und dazu geeignet ist, bei deren Betätigung durch einen Fahrzeuginsassen das Fensterglas zu bewegen,
gekennzeichnet durch,
Führungseinrichtungen (24), die innerhalb des Türkörpers ausgebildet sind und die einen Kanal (24a) zur gleitenden Aufnahme eines vorderen Randabschnitts des Fensterglases (22) haben.

2. Fahrzeugtüraufbau nach Anspruch 1, dadurch gekennzeichnet, daß die Abdichteinrichtungen an dem vorderen und dem oberen Rahmenabschnitt (202, 204) einen Fenstergummi (42) aufweisen, der dort angebracht ist, um gegen das Fensterglas in seiner vollständig geschlossenen Stellung abzudichten.

3. Fahrzeugtüraufbau nach Anspruch 1 oder 2, dadurch gekennzeichnet, daß in den Kanal (206a) des weiteren Rahmenabschnitts (206) Anschlagelemente (206b) eingepasst sind und daß die Führungseinrichtungen (24) Anschlagelemente (24b) zu Aufnahme und Führung des vorderen Randabschnitts des Fensterglases (22) aufweisen.

4. Fahrzeugtüraufbau nach einem der Ansprüche 1 bis 3, dadurch gekennzeichnet, daß sich die Führungseinrichtungen (24) parallel zu dem weiteren Rahmenabschnitt (206) erstrecken.

**Revendications**

1. Un ensemble de portière de véhicule, comportant:
— un corps de portière (20);
— une vitre (22) montée dans ledit corps de portière (20) de manière déplaçable vers le haut et vers le bas;
— un cadre de fenêtre monté sur ledit corps de portière (20) et comprenant un élément de cadre avant (202) relié audit corps de portière et pourvu de moyens d'étanchéité (42) pour assurer l'étanchéité par rapport à une partie de bord avant de la vitre (22) lorsque celle-ci est dans sa position de fermeture; un autre élément de cadre (206) relié au corps de portière (20) et s'étendant sensiblement sur toute la hauteur de l'ensemble de portière, tout en présentant un canal (206a); et un élément de cadre supérieur (204) reliant les membres de cadre sus-mentionnés (202, 206), de manière à définir une ouverture de fenêtre, ledit élément de cadre supérieur (204) étant pourvu de moyens d'étanchéité (42) pour assurer l'étanchéité par rapport à une partie supérieure du bord de la vitre (22) lorsque celle-ci se trouve dans sa position de fermeture, cependant que les surfaces extérieures desdits éléments de cadre avant supérieur et autres (202, 204, 206) affleurent sensiblement la surface extérieure de ladite vitre (22);
— un coulisseau (40) fixé sur le bord arrière de la vitre (22) et comportant une protubérance arrière incurvée vers l'intérieur, de manière à être montée à coulissement dans ledit canal (206a) défini dans ledit autre élément de cadre (206); et
— un régulateur de fenêtre (50) monté à l'intérieur du corps de la portière (20) et susceptible d'être actionné par un passager afin de déplacer ladite vitre (22);
caractérisé par des moyens de guidage (24) disposés à l'intérieur du corps de ladite portière et comportant un canal (24a) dans lequel est monté à coulissement une partie marginale avant de ladite vitre (22).

2. Un ensemble de portière de véhicule tel que revendiqué dans la revendication 1, dans lequel lesdits moyens d'étanchéité prévus sur les éléments avant et supérieur de cadre (202, 204) comportent une bande d'étanchéité (42) qui y est fixée de manière à entrer en contact étanche avec ladite vitre (22) lorsque celle-ci se trouve dans sa position de fermeture totale.

3. Un ensemble de portière de véhicule tel que revendiqué dans la revendication 1 ou 2, dans lequel des moyens de tampon sont disposés dans le canal (206a) dudit autre élément de cadre (206), cependant que lesdits moyens de guidage (24) comportent des moyens de tampon (24) appelés à recevoir et à contacter ladite partie de bord avant de ladite vitre (22).

4. Un ensemble de portière tel que revendiqué dans l'une quelconque des revendications 1 à 3, dans lequel lesdits moyens de guidage (24) s'étendent parallèlement auxdits autres éléments de cadre (206).

# Fig. 1

# Fig. 2

Fig. 3

24b

22

24

22b

24a

Fig. 4

206b

206

40

22c

22

22a

206a

Fig. 7

206b

40

22c

22

22a

206a

23

## Fig. 5

## Fig. 6

## Fig. 8

## Fig. 9

## Fig. 10